# EUROPÄISCHE PATENTSCHRIFT

(11) **EP 0 986 808 B1**
(45) Veröffentlichungstag und Bekanntmachung des Hinweises auf die Patenterteilung: **20.02.2002**
(21) Anmeldenummer: 98932118.7
(22) Anmeldetag: 04.06.1998
(51) Int. Cl.: G10L 15/22

(54) **HAUSHALTSGERÄT, INSBESONDERE ELEKTRISCH BETRIEBENES HAUSHALTSGERÄT**
HOUSEHOLD APPLIANCE, SPECIALLY AN ELECTRICALLY OPERATED HOUSEHOLD APPLIANCE
APPAREIL MENAGER, EN PARTICULIER APPAREIL MENAGER ELECTRIQUE

(30) Priorität: 06.06.1997 DE 19723938; 27.08.1997 DE 19737356
(43) Veröffentlichungstag der Anmeldung: 22.03.2000
(73) Patentinhaber: BSH Bosch und Siemens Hausgeräte GmbH, 81669 München (DE)
(72) Erfinder: HAS, Uwe, D-84579 Unterneukirchen (DE); ZIEGLER, Felicitas, D-83371 Stein (DE)
(86) Internationale Anmeldenummer: EP9803346
(87) Internationale Veröffentlichungsnummer: WO9855992

(56) Entgegenhaltungen:
- EP-A- 0 031 144
- EP-A- 0 078 015
- EP-A- 0 145 683
- DE-A- 3 803 220
- DE-A- 4 214 668

## Beschreibung

Die Erfindung betrifft ein Haushaltsgerät, insbesondere ein elektrisch betriebenes Haushaltsgerät, nach dem Oberbegriff des Patentanspruchs 1, sowie eine Kombination aus Einrichtungen nach Patentanspruch 19, die zum Betrieb des Haushaltgeräts angepaßt sind.

In Haushaltsgeräten wird durch mechanische Stellglieder dem oder den elektrischen Verbrauchern Leistung zugeführt.

Die mechanische Stellglieder bzw. Bedienelemente befinden sich im Haushaltsgerät, so daß die Bedienperson am Ort des Haushaltsgeräts zu sein hat, um die Bedienelemente zu betätigen. Die Bedienperson hat damit die aktuelle Arbeit zu unterbrechen und gegebenenfalls die Hände zu reinigen und zu trocknen. Darüber hinaus erweist sich die Betätigung von Haushaltsgeräten für behinderte Menschen oft als relativ mühsam.

Es ist bereits ein Produkt mit der Bezeichnung "SICARE pilot" (Firma evosoft Softwarevertrieb GmbH, D-90411 Nümberg/Deutschland) für den REHA-Bereich bekannt, das ein mobiles Gerät umfaßt, welches gesprochene Befehle in Signale umsetzt. Die Ausgabe der Signale erfolgt durch Infrarotsender, z.B. für die Steuerung von Fernsehgeräten, Videorecordern, HiFi Anlagen, Telefon und Beleuchtung, durch Funksender, z.B. für die Steuerung von Haustüren, Fahrstühlen, Ruf- und Alarmanlagen oder durch drahtgebundene Schnittstellen, z.B. für die Steuerung von elektrisch angetriebenen Rollstühlen und motorverstellbaren Betten. Das bekannte Produkt, das für körperbehinderte Personen bestimmt ist, ermöglicht die Speicherung von maximal 64 Befehlen. Das mobile Gerät sendet den Befehl für die gewünschte Aktion, z.B. "Fernseher an", automatisch über die zuvor ausgewählte Schnittstelle an das entsprechende Gerät. Jede einzelne Anweisung kann mehrere Geräte gleichzeitig ansprechen. Das bekannte Produkt wird auf die individuellen Sprachmuster einer Person trainiert und realisiert damit eine sprecherabhängige Spracherkennung. Im Idealzustand sind andere Personen nicht in der Lage, aus gesprochenen Befehlen Signale zu bilden, die die Geräte steuern. Die Spracherkennung ist bei dem bekannten Produkt in der Weise realisiert, daß vorgegebene Worte (z.B. "Haus", "Licht", "vier", "minus") gemäß einem Menübaum mit mehreren Zweigen zu sprechen sind, wobei die einzelnen Worte in beliebigem zeitlichem Abstand gesprochen werden können. Wenn wegen einer Unpäßlichkeit der körperbehinderten Person die Spracheingabe vorzeitig abgebrochen wird, können einzelne Worte, z.B. aus einem Radio- oder Fernsehgerät, die in dem nach dem Spracheingabeabbruch anstehenden Zweig des Menübaums vorgesehen sind, zur Bildung von Signalen führen, die ein oder mehrere Geräte steuern. Eine solche ungewollte Steuerung eines oder mehrerer Geräte, z.B. eines Rollstuhls, kann die körperbehinderte Person gefährden.

Aus DE 38 032 202 ist ein Haushaltsgerät mit einer Programmschalteinrichtung bekannt, wobei eine phonetische Steuereinrichtung in der Weise ausgestaltet ist, dass nicht mehr oder lange Zeit nicht mehr aufgerufene Code-Wörter bzw. ihre Sprachmustersignale in einem Sprachmusterspeicher gelöscht werden.

Aus EP 0 031 144 ist ein Heizgerät mit einer Einrichtung zur Erkennung von Sprache sowie mit einer Einrichtung zur Generierung künstlicher Sprachsignale bekannt. In dem bekannten Heizgerät wird zunächst ein erster Spracherkennungsschritt (m-1) durchgeführt, dem sich ein Schritt (m-2) anschließt, in dem ein künstliches Sprachsignal erzeugt wird, dem sich weiterhin ein zweiter Spracherkennungsschritt (m-3) anschließt.

Ausgehend von diesem Stand der Technik liegt der Erfindung die Aufgabe zugrunde, die sprachgesteuerte Bedienung von Haushaltsgeräten einfach, sicher und schnell zu gestalten.

Diese Aufgabe wird erfindungsgemäß durch ein Haushaltsgerät gelöst, das in Anspruch 1 definiert ist. Die Aufgabe wird ferner durch die Kombination aus Einrichtungen nach dem Anspruch 19 gelöst.

Das erfindungsgemäße Haushaltsgerät weist anstelle der mechanischen Bedienelemente oder auch zusätzlich zu diesen eine erste Einrichtung zur Eingabe von Sprachsignalen, die Betriebsfunktionen des Haushaltsgeräts bezeichnen, eine zweite Einrichtung zur Erkennung der durch die Sprachsignale bezeichneten Betriebsfunktionen und eine dritte Einrichtung zur Umsetzung der erkannten Sprachsignale in Steuerbefehle zum Betrieb des Haushaltsgeräts auf. Damit läßt sich das Haushaltsgerät auch von Bedienpersonen bedienen, die sich nicht unmittelbar am Ort des Haushaltsgeräts aufhalten. Eine manuelle Bedienung erfolgt nicht, so daß die Bedienperson während der Bedienung des Haushaltsgeräts "die Hände frei hat". Die Bedienperson kann damit beispielsweise Zutaten für die Zubereitung einer Speise bearbeiten und gleichzeitig eine Kochmulde eines Herdes einschalten. Die Bildung ungewollter Steuerbefehle wird dadurch verhindert, daß aufeinanderfolgende Sprachsignale nur dann zur Bildung eines Steuerbefehls führen, wenn die aufeinanderfolgenden Sprachsignale in einer definierten Reihenfolge und innerhalb einer vorgebbaren Zeit eingegeben werden. Wenn diese Bedingungen nicht vorliegen, wird kein Steuerbefehl gebildet. Weiterhin werden die Sprachsignalverbreitungsprozeduren an den Startpunkt der Verarbeitungsabfolge zurückgestellt. Soll also der ursprünglich beabsichtigte Steuerbefehl gebildet werden, sind nicht die noch fehlenden Sprachsignale einzugeben, vielmehr sind alle vorgesehenen Sprachsignale innerhalb der definierten Reihenfolge, innerhalb der vorgebbaren Zeit einzugeben.

Die Spracherkennung erfolgt vorzugsweise sprecherunabhängig und ermöglicht damit, die Haushaltsgeräte in größerer Serie herzustellen, ohne daß Modifikationen zur Bedienbarkeit durch einzelne Bedienpersonen vorzunehmen sind.

Eine weitere vorteilhafte Ausführungsform des erfindungsgemäßen Haushaltsgeräts ist dadurch gekennzeichnet, daß das einem Steuerwerk zugeordnete Steuerungsprogramm in der Weise ausgestaltet ist, daß die erste Einrichtung und/oder die zweite Einrichtung und/oder die dritte Einrichtung nur nach Betätigung eines mechanischen Bedienelements aktivierbar ist (sind). Dies ist mit dem Vorteil verbunden, daß ein eventuell wochenlang laufendes Radio- oder Fernsehgerät durch das rein zufällige Abspielen von "passenden" Schlüsselwörtern das Hausgerät nicht einschalten kann.

Eine weitere Ausführungsform des erfindungsgemäßen Haushaltsgeräts ist mit dem Vorteil verbunden, daß Einrichtungen, die zur Eingabe von Sprachsignalen, zur Erkennung von Sprachsignalinhalten sowie zur Umsetzung von Steuersignalen dienen, für eine Mehrzahl von Haushaltsgeräten genutzt werden. Separate, hausgeräteindividuelle Einrichtungen sind damit nicht erforderlich.

Weitere vorteilhafte Ausführungsformen sind in den Unteransprüchen gekennzeichnet.

Die Erfindung wird nun anhand der Zeichnung beschrieben.

Es zeigen:
- Fig. 1: schematisch ein erfindungsgemäßes Haushaltsgerät;
- Fig. 2: ein Ausführungsbeispiel einer Abfolge von Verfahrensschritten bei der
- Fig. 3: eine Anordnung mit einem zentralen Rechner, der eine Mehrzahl von Haushaltsgeräten steuert, und
- Fig. 4: ein Haushaltsgerät, das an die Anordnung nach Figur 3 angeschlossen ist.

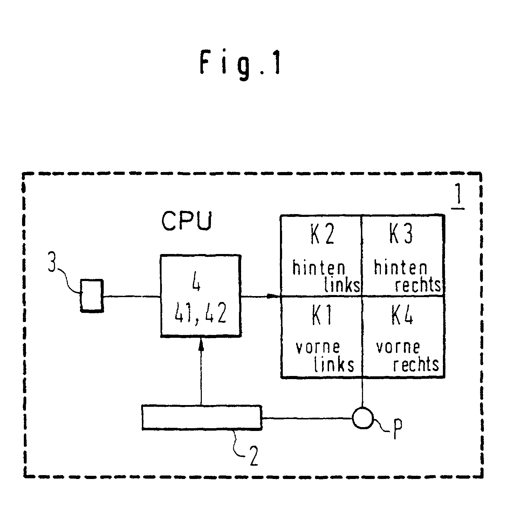

Das in Fig. 1 schematisch dargestellte Ausführungsbeispiel eines erfindungsgemäßen Haushaltsgeräts, das beispielsweise ein elektrisch betriebener Herd mit einer Mulde ist, weist mechanische Bedienelemente 2 auf, die eine Leistungsquelle P schalten. Die Leistungsquelle P dient der Zufuhr elektrischer Leistung, z.B. an eine Kochmuide mit einer ersten Kochstelle K1 (vorne links), einer zweiten Kochstelle K2 (hinten links), einer dritten Kochstelle K3 (hinten rechts) und einer vierten Kochstelle K4 (vorne rechts).

Weiterhin weist das erfindungsgemäße Haushaltsgerät eine erste Einrichtung 3 auf, die der Eingabe von Sprachsignalen dient und insbesondere durch ein unmittelbar am Haushaltsgerät angebrachtes Mikrofon gebildet ist.

Alternativ hierzu ist vorgesehen, daß die Einrichtung 3 getrennt von dem Haushaltsgerät angeordnet ist und beispielsweise in einem tragbaren Fernsprechendgerät (schnurlos Telefon; Handy) gebildet ist, wobei das vorhandene Mikrofon des Fernsprechendgeräts eine Doppelfunktion erhält.

Die erste Einrichtung 3 zur Eingabe von Sprachsignalen ist mit einer zweiten, an sich bekannten Einrichtung 41 zur Erkennung der durch die Sprachsignale bezeichneten Betriebsfunktionen und diese wiederum mit einer dritten, an sich bekannten Einrichtung 42 zur Umsetzung der erkannten Sprachsignale in Steuerbefehle zum Betrieb des Haushaltsgeräts 1 verbunden.

Die zweite Einrichtung 41 und die dritte Einrichtung 42 können räumlich verbunden und schaltungstechnisch durch eine Einrichtung 4, bzw. durch ein Steuerwerk CPU (Mikroprozessor) gebildet sein.

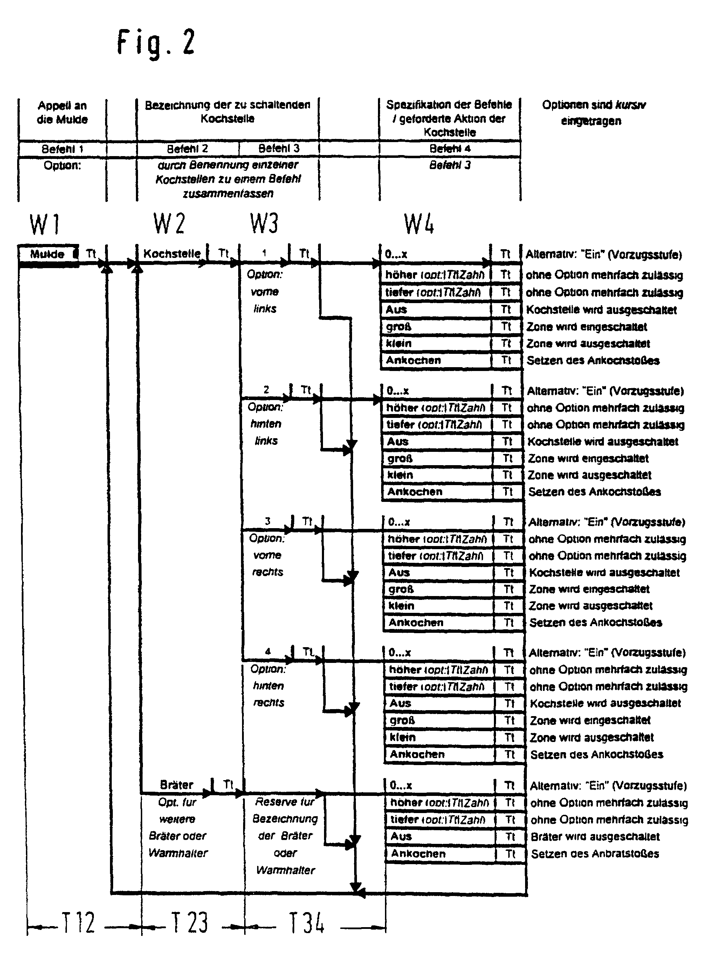

Diesem Steuerwerk, das durch die zweite und dritte Einrichtung 41, 42 gebildet sein kann bzw. diesen Einrichtungen sowie der ersten Einrichtung 3 zugeordnet ist, ist ein Steuerungsprogramm zugeordnet, das unter anderem in der Weise ausgestaltet ist, daß aufeinanderfolgende Sprachsignale nur dann zur Bildung eines Steuerbefehls führen, wenn aufeinanderfolgende Sprachsignale (z.B. W1, W2, W3, W4 in Figur 2), deren Reihenfolge durch einen Menübaum (Figur 2) definiert ist, innerhalb einer vorgebbaren Zeit (T12 = Zeitraum zwischen dem Beginn oder dem Ende der Eingabe eines Sprachsignals W1 und dem Beginn oder dem Ende der Eingabe eines folgenden Sprachsignals W2) eingegeben werden.

Weiterhin kann das Steuerungsprogramm in der Weise ausgestaltet sein, daß bei einer Eingabe aufeinanderfolgender Sprachsignale (z.B. W1, W2 außerhalb der vorgebbaren Zeit (T12) oder bei einem Abbruch der Sprachsignaleingabe (z.B. keine Eingabe von W3 und W4) ein Steuerbefehl nur dann gebildet wird, wenn alle zur Bildung eines Steuerbefehls erforderlichen Sprachsignale erneut, nun tatsächlich in der definierten Reihenfolge innerhalb der jeweils vorgebbaren Zeit (T12 bezüglich W1, W2; T23 bezüglich W2, W3); T34 bezüglich W3, W4 in Figur 2) eingegeben werden.

Vorzugsweise erfolgt die Sprachsignalerkennung sprecherunabhängig. Sie kann jedoch auch sprecherabhängig, insbesondere sprechergruppenabhängig erfolgen. Sprache von Erwachsenen weisen Sprachcharakteristiken auf, die sich von Kinder-Sprachcharakteristiken entscheiden. Bei dieser Ausführungsform des erfindungsgemäßen Haushaltsgeräts lassen sich Kinder von der Betätigung des Haushaltsgeräts ausschließen.

Das Steuerungsprogramm kann auch in der Weise ausgestaltet sein, daß die erste und/oder die zweite und/oder die dritte Einrichtung nur nach Betätigung eines mechanischen Bedienelements 2 aktivierbar ist bzw. sind. Das mechanische Bedienelement 2 ist in diesem Fall eine Sondertaste, durch deren Betätigung ein Befehl gebildet wird, der angibt, daß eine Steuerung des Haushaltsgeräts durch Sprachsignale erfolgen soll. Die konkrete Steuerung, z.B. einer bestimmten Temperatur einer Kochstelle eines Herdes erfolgt damit nicht; diese Steuerung wird durch die Betätigung der Sondertaste vielmehr vorbereitet. Insbesondere ist die erste und/oder die zweite und/oder die dritte Einrichtung unmittelbar nach einem Abschalten des Haushaltsgeräts nur nach Betätigung eines solchen mechanischen Bedienelements 2 (Sondertaste) aktivierbar.

In diesem Fall läßt sich das Haushaltsgerät durch Sprachsignale nach einem vorhergehenden Abschalten nur dann aktivieren, wenn zuvor das mechanische Bedienelement betätigt worden ist. Dabei kann vorgesehen sein, daß diese Betätigung nur innerhalb eines vorgebbaren Zeitraums nach einem Abschalten freigegeben wird.

Weiterhin sind Pausen (Tt in Figur 2) unterschiedlicher Länge zwischen den Sprachsignalen vorgebbar.

Die zweite Einrichtung 41 kann die eingegebenen Sprachsignale auch sprecherabhängig erkennen. Damit wird es möglich, nur bestimmte Personen, beispielsweise nur die erwachsenen Mitglieder eines Haushalts für die Betätigung des Haushaltsgeräts zu autorisieren.

Im vorliegenden Ausführungsbeispiel weist das Haushaltsgerät eine Mehrzahl elektrischer Verbrauchselemente (K1, K2, K3, K4) auf, die individuell durch Sprachsignale steuerbar sind.

Die Sprachsignale bestehen vorzugsweise aus einer Folge vorgebbarer "Schlüsselwörter", die insbesondere in einer durch einen Menübaum definierten Reihenfolge zu sprechen sind. Ein Beispiel eines solchen Menübaums ist in Figur 2 dargestellt. Der Aufbau dieser Folge orientiert sich dabei an der Grammatik der Sprache, in der die Schlüsselwörter gesprochen werden.

Die in Fig. 2 dargestellten Wörter, wie "Mulde", "Kochstelle" können im Gebrauch der Kochmulde durch beliebig gestaltete Lautfolgen ersetzt werden, so daß z.B. auch sprachbehinderte Bedienpersonen erfindungsgemäße Haushaltsgeräte in einfacher Weise steuern können.

In dem in Fig. 2 dargestellten Ausführungsbeispiel beginnt jede Folge von Schlüsselwörtern mit dem Wort "Mulde" (W1) als Ansprache des zu steuernden Haushaltsgeräts selbst. Danach wird die Funktion "Kochstelle" (W2, 1. Alternative) oder "Bräter" (W2, 2. Alternative) ausgesprochen, wobei die Funktion "Bräter" und "Kochstelle" dem haushaltsüblichen Gebrauch entsprechend intuitiv als voneinander unabhängig betrachtet werden, auch wenn sie im gleichen Gebiet auf der Kochmulde genutzt werden. Nach der Wahl der Funktion "Kochstelle" oder "Bräter" wählt die Bedienperson durch das Schlüsselwort "1" oder "2" oder "3" oder "4" (W3, 1., 2., 3. oder 4. Alternative) den Ort auf der Kochmulde (vorne links; hinten links; hinten recht; vorne rechts) aus, auf dem die Kochstelle Aktionen durchführen soll. Als Beispiel für alternative Schlüsselwörter kann statt einer Zahl auch die Bezeichnung "vorne links", "hinten links", "hinten rechts" oder "vome rechts" ausgesprochen werden.

Nachdem so die Funktion "Kochstelle" oder "Bräter" und die genaue Ortsbezeichnung auf der Kochmulde angegeben sind, wird durch ein weiteres Schlüsselwort (W4) die von der betreffenden Kochstelle gewünschte Aktion angegeben.

Zwischen der Aussprache von zwei Schlüsselwörtern liegt eine Pause, die in Fig. 2 mit Tt bezeichnet ist. Die Pause dient dazu, die Schlüsselwörter bei Bedarf voneinander deutlich zu trennen und gleichzeitig eine Zeitgrenze zu definieren, nach der das folgende Wort spätestens gesprochen werden muß. Wenn das zweite Wort nicht oder nicht rechtzeitig gesprochen wird, dann wird dies als Fehler erkannt. Eine derartige unvollständige Folge von Sprachsignalen bzw. Schlüsselwörtern führt nicht zur Bildung eines Steuerbefehls und damit zu keiner Aktion der Kochmulde; es erfolgt ein sogenanntes Time-out. Dies gilt auch, wenn nach Überschreiten einer Zeitgrenze die Folge von Schlüsselwörtern korrekt weitergesprochen wird.

In einem solchen Fehlerfall muß die für die Steuerung des Haushaltsgeräts (hier: Kochmulde) entsprechende Folge von Schlüsselwörtern W1, W2, W3, W4 erneut von Beginn an ausgesprochen werden.

Fehlbedienungen der Kochmulde, wie sie z.B. aus der Folge von Wörtern eines zufälligen Gespräches oder aus einer Radio- oder Fernsehsendung im Hintergrund zu erwarten sind, sind bei dieser erfindungsgemäß vorgesehenen Abfolge von Verfahrensschritten nicht zu erwarten, da die Wahrscheinlichkeit, daß genau die vorgegebenen Schlüsselwörter in genau der vorgesehenen Reihenfolge in genau der vorgegebenen zeitlichen Relation außerordentlich gering ist.

Die Betriebssicherheit der Kochmulde kann durch weitere gesonderte Maßnahmen gewährleistet werden. Damit beispielsweise eine ausgeschaltete Kochmulde nicht z.B. durch ein mehrere Wochen lang spielendes Radio eingeschaltet werden kann, das eine zufällige passende Kombination von Schlüsselwörtern angibt, wird nach einem Ausführungsbeispiel der vorliegenden Erfindung eine abgeschaltete Kochmulde durch die manuelle Betätigung eines mechanischen Bedienelements 2 für die Eingabe von Sprachsignalen vorbereitet. Wenn diese Sprachsignaleingabe innerhalb einer bestimmten Zeit nicht erfolgt, dann geht die durch die vorstehend genannten Einrichtungen des Haushaltsgeräts gebildete Bedienlogik wieder in ihren Ruhezustand über und kann nicht durch eine zufällige Kombination von Schlüsselwörtern in Betrieb genommen werden.

Wenn unmittelbar nach Aussprache einer Folge von Schlüsselwörtern bei einer weiteren Kochstelle der Kochmulde Aktionen ausgelöst werden sollen, dann ist die Aussprache des Schlüsselwortes "Mulde" nicht notwendig, wenn die hierfür definierte Zeit eines Time-outs Tt noch nicht verstrichen ist. Es kann dann sofort eine neue Kochstelle durch das entsprechende Schlüsselwort ausgewählt werden. Analog wird verfahren, wenn bei einer Kochstelle mehrere Aktionen durchgeführt werden sollen. Ein Beispiel hierfür ist die Folge von Schlüsselwörtern "Mulde - Kochstelle - vorne links - ein - Zone - Ankochen": Sie schaltet die Kochstelle vorne links mit der Zusatzzone ein und setzt den Ankochstoß. Wenn mindestens ein Heizelement der Kochmulde in Betrieb ist, dann ist eine Betätigung des mechanischen Bedienelements (Sicherheitsschalter) vor jeder weiteren sprachlichen Bedienung der Kochmulde nicht notwendig, denn es kann davon ausgegangen werden, daß sich eine zur Bedienung der Kochmulde autorisierte Person im Raum befindet und wie bisher die sichere Funktion der Kochmulde überwacht.

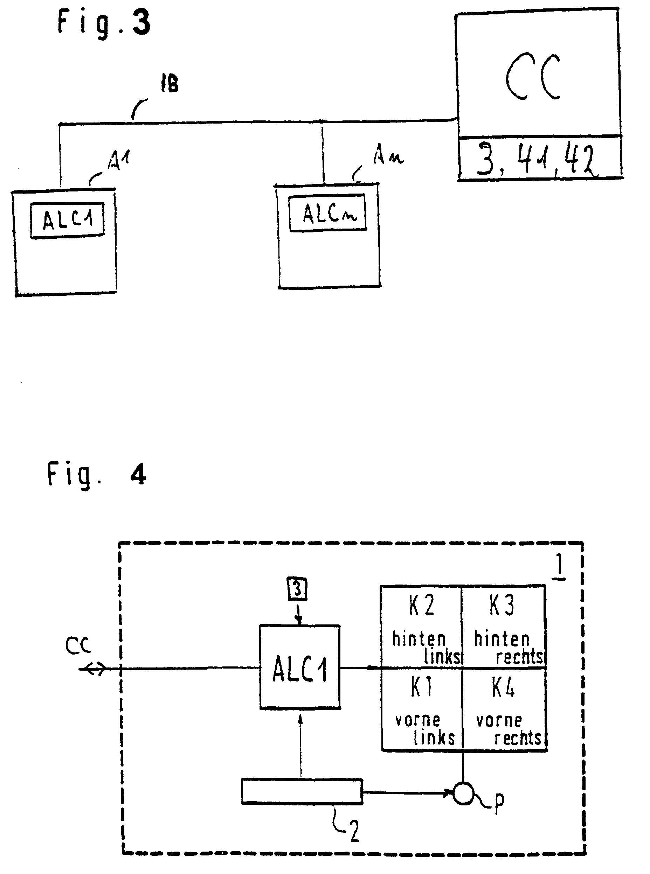

Die in Fig. 3 dargestellte Schaltungsanordnung umfaßt einen zentralen Rechner CC und eine Mehrzahl von Haushaltsgeräten A1, ..., An. Jedes Haushaltsgerät Ax (x = 1,.. n) kann eine lokale Steuerung ALCx aufweisen. Die Haushaltsgeräte sind über einen Installationsbus IB mit dem zentralen Rechner CC verbunden. Die lokalen Steuerungen der Haushaltsgeräte können diese jeweils mittels eines Steuerungsprogramms steuern, das beispielsweise in dem jeweiligen Haushaltsgerät abgespeichert ist. Die lokalen Haushaltsgerätesteuerungen können auch in Abhängigkeit eines Steuerungsprogramms gesteuert werden, das dem zentralen Rechner CC zugeordnet ist.

Dem zentralen Rechner CC ist eine erste Einrichtung 3 zur Eingabe von Sprachsignalen, die Betriebsfunktionen mindestens eines Haushaltsgeräts bezeichnen, zugeordnet sowie eine zweite Einrichtung 41 zur Erkennung der durch die Sprachsignale bezeichneten Betriebsfunktionen (Sprachsignalinhalte) sowie eine dritte Einrichtung 42, die erkannte Sprachsignalinhalte in Steuerbefehle zum Betrieb mindestens eines Haushaltsgeräts umsetzt.

Das in Fig. 4 schematisch dargestellte Ausführungsbeispiel eines erfindungsgemäßen Haushaltsgeräts A1, das beispielsweise eine elektrisch betriebene Mulde ist, weist mechanische Bedienelemente 2 auf, die eine Leistungsquelle P schalten. Anstelle eines oder mehrerer mechanischer Bedienelemente 2 können auch andere Bedienelemente wie zum Beispiel Berührungsschalter vorgesehen sein.

Die Leistungsquelle P dient der Zufuhr elektrischer Leistung, z.B. an eine Kochmulde mit einer ersten Kochstelle K1 (vorne links), einer zweiten Kochstelle K2 (hinten links), einer dritten Kochstelle K3 (hinten rechts) und einer vierten Kochstelle K4 (vorne rechts).

Die erste Einrichtung 3 zur Eingabe von Sprachsignalen (Figur 3) kann in ein Haushaltsgerät integriert sein, wie dies in Figur 4 für das Haushaltsgerät A1 dargestellt ist. Die erste Einrichtung 3 ist insbesondere durch mindestens ein unmittelbar am Haushaltsgerät angebrachtes Mikrofon gebildet, vorzugsweise ist das Mikrophon bzw. sind die Mikrophone auf den vermutlichen Aufenthaltsort der Schallquelle (Kopf des Sprechers) ausgerichtet. Mehrere Mikrophone ermöglichen es, verschiedene Zonen mit maximaler Empfindlichkeit zu überwachen. Das bzw. die Mikrophone können auch an anderen Orten, z.B. zusätzlich zum Ort (z.B. Küche) des Haushaltsgeräts auch an einem anderen Ort (z.B. Wohnzimmer) angeordnet sein.

Die erste Einrichtung 3 ist mit der lokalen Steuerung ALC1 verbunden, die weiterhin mit dem zentralen Rechner CC (Figur 1) und der Kochmulde (K1, K2, K3, K4) verbunden ist. Weiterhin kann die lokale Steuerung ALC1 mit den Bedienelementen 2 verbunden sein, um in Abhängigkeit von Betätigungen der Bedienelemente 2 Steuerungsprozeduren vorzunehmen.

Das oder die Mikrophone haben Richtcharakteristik. Die Keule maximaler Empfindlichkeit liegt in der vermutlichen Kopfhöhe der Bedienperson. Durch Mikrophonblenden, die am Mikrophon beweglich und/oder auswechselbar angebracht sind, kann die Richtcharakteristik des Mikrophons an die Gegebenheiten des jeweiligen Raums angepaßt werden. Das Mikrophon bzw. die Mikrophone werden auf einem Halteelement installiert, das Körperschall nicht überträgt. Mehrere Mikrophone ermöglichen es, verschiedene Zonen mit maximaler Empfindlichkeit zu überwachen.

Die erste Einrichtung 3 kann auch ein elektrisches Filter aufweisen, das Schwingungen mit Frequenzen unterhalb von etwa 100 Hertz und/oder Schwingungen oberhalb von etwa 5 Kilohertz dämpft. Das Filter ist insbesondere ein Bandpaß, das Schwingungen mit Frequenzen unterhalb von etwa 100 Hertz und Schwingungen oberhalb von etwa 4 bzw. 5 Kilohertz dämpft.

Weiterhin kann der ersten Einrichtung 3 eine Einrichtung zugeordnet sein, die akustische Störungen, insbesondere elektrische Signale, die die akustischen Störungen darstellen, mißt. Der ersten Einrichtung 3 kann auch eine Einrichtung zugeordnet sein, die die gemessenen akustischen Störungen, insbesondere elektrische Signale, die die akustischen Störungen darstellen, mit elektrischen Nutzschallsignalen vergleicht. Damit lassen sich Störungen automatisch eliminieren.

Die erste Einrichtung 3 kann räumlich getrennt von der zweiten Einrichtung 41 zur Erkennung der durch die Sprachsignale bezeichneten Betriebsfunktionen angeordnet sein, wobei die erste Einrichtung 3 z.B. über ein abgeschirmtes Kabel mit der zweiten Einrichtung 41 verbunden ist. Die Einrichtungen 3 und 41 können drahtlos miteinander verbindbar sein, z.B. über eine Infrarot-Verbindung. Das Mikrophon ist auf einem körperschalldämpfenden Halteelement installiert.

Die Einrichtung 3, die getrennt von dem zentralen Rechner CC (Figur 1) bzw. einem Haushaltsgerät angeordnet sein kann, ist beispielsweise durch ein tragbares Fernsprechendgerät (Schnurlostelefon; Handy) gebildet.

Demgegenüber sind die zweite Einrichtung 41 zur Erkennung der durch die Sprachsignale bezeichneten Betriebsfunktionen und die dritte Einrichtung 42 zur Umsetzung der erkannten Sprachsignale in Steuerbefehle zum Betrieb eines Haushaltsgeräts (z.B. A1) vorzugsweise im bzw. in der Nähe des zentralen Rechners CC angeordnet.

Das dem zentralen Rechner CC zugeordnete Steuerungsprogramm ist entsprechend dem schon anhand von Figur 2 beschriebenen Steuerungsprogramm in der Weise ausgestaltet, daß aufeinanderfolgende Sprachsignale nur dann zur Bildung eines Steuerbefehls führen, wenn aufeinanderfolgende Sprachsignale W1, W2, W3, W4 (vgl. Figur 2) innerhalb einer vorgebbaren Zeit T12, T23, T34 (Figur 2) eingegeben werden.

Bei einer Eingabe aufeinanderfolgender Sprachsignale außerhalb der vorgebbaren Zeit oder bei einem Abbruch der Sprachsignaleingabe wird ein Steuerbefehl nur dann gebildet, wenn alle zur Bildung eines Steuerbefehls erforderlichen Sprachsignale in der definierten Reihenfolge und aufeinanderfolgende Sprachsignale innerhalb der vorgebbaren Zeit (T12, T23, T34) erneut eingegeben werden.

Ein Haushaltsgerät läßt sich durch Sprachsignale nach einem vorhergehenden Abschalten nur dann aktivieren, wenn zuvor das (mechanische) Bedienelement betätigt worden ist. Dabei kann vorgesehen sein, daß diese Betätigung nur innerhalb eines vorgebbaren Zeitraums freigegeben wird.

Weiterhin kann vorgesehen sein, daß die Steuerung des Haushaltsgeräts bzw. die Bildung eines Steuerbefehls nach Eingabe einer vorgebbaren Zahl, beispielsweise 3, von Sprachsignalen aktivierbar ist.

Ebenso sind Pausen unterschiedlicher Länge zwischen den Sprachsignalen vorgebbar.

Die Sprachsignalerkennung erfolgt vorzugsweise sprecherunabhängig, jedoch kann die Sprachsignalerkennung auch mittels der zweiten Einrichtung 41 sprecherabhängig erfolgen, so daß es ermöglicht wird, nur bestimmte Personen, beispielsweise nur die erwachsenen Mitglieder eines Haushalts für die Betätigung des Haushaltsgeräts zu autorisieren. erwachsenen Mitglieder eines Haushalts für die Betätigung des Haushaltsgeräts zu autorisieren.

In dem in Figur 4 dargestellten Ausführungsbeispiel weist das Haushaltsgerät A1 eine Mehrzahl elektrischer Verbrauchselemente K1, K2, K3, K4 auf, die individuell bzw. in bestimmten Kombinationen (K2 und K3) durch Sprachsignale steuerbar sind.

Die Sprachsignale bestehen vorzugsweise aus einer Folge vorgebbarer "Schlüsselwörter", die insbesondere in einer definierten Reihenfolge zu sprechen sind. Der Aufbau dieser Folge orientiert sich dabei an der Grammatik der Sprache, in der die Schlüsselwörter gesprochen werden. Die Wörter wie "Mulde", "Kochstelle" können im Gebrauch der Kochmulde durch beliebig gestaltete Lautfolgen ersetzt werden, so daß z.B. auch sprachbehinderte Bedienpersonen die Haushaltsgeräte in einfacher Weise steuern können.

Jede Folge von Schlüsselwörtern mit dem Wort "Mulde" als Ansprache des Haushaltsgeräts selbst. Danach ist die Funktion "Kochstelle" oder "Bräter" zu benennen, wobei die Funktion "Bräter" und "Kochstelle" dem haushaltsüblichen Gebrauch entsprechend intuitiv als voneinander unabhängig betrachtet werden, auch wenn sie im gleichen Gebiet auf der Kochmulde genutzt werden.

Nach der Wahl der Funktion "Kochstelle" oder "Bräter" wählt die Bedienperson durch das Schlüsselwort "1" oder "2" oder "3" oder "4" den Ort auf der Kochmulde (vorne links; hinten links; hinten recht; vorne rechts) aus, auf dem die Kochstelle Aktionen durchführen soll. Als Beispiel für alternative Schlüsselwörter kann statt einer Zahl auch die Bezeichnung "vorne links", "hinten links", "hinten rechts" oder "vorne rechts" ausgesprochen werden.

Nachdem so die Funktion "Kochstelle" oder "Bräter" und die genaue Ortsbezeichnung auf der Kochmulde angegeben sind, wird durch ein weiteres Schlüsselwort die von der betreffenden Kochstelle gewünschte Aktion angegeben, z.B. "höher" für ein z.B. schrittweises Zuschalten elektrischer Energie.

Zwischen der Aussprache von zwei Schlüsselwörtern liegt eine Pause, die in Fig. 2 mit Tt bezeichnet ist. Die Pause dient dazu, die Schlüsselwörter bei Bedarf voneinander deutlich zu trennen und gleichzeitig eine Zeitgrenze zu definieren, nach der das folgende Wort spätestens gesprochen werden muß. Wenn das zweite Wort nicht oder nicht rechtzeitig gesprochen wird, dann wird dies als Fehler erkannt. Ein derart un-Schlüsselwörtern korrekt weitergesprochen wird. Die Pausen können unterschiedlich lang sein.

Für eine Aktion der Kochmulde muß die entsprechende Folge von Schlüsselwörtern erneut von Beginn an ausgesprochen werden.

Fehlbedienungen der Kochmulde, wie sie z.B. aus der Folge von Wörtern eines zufälligen Gespräches oder aus einer Radio- oder Fernsehsendung im Hintergrund zu erwarten sind, sind bei dieser erfindungsgemäß vorgesehenen Abfolge von Verfahrensschritten nicht zu erwarten, da die Wahrscheinlichkeit, daß genau die vorgegebenen Schlüsselwörter in genau der vorgesehenen Reihenfolge in genau der vorgegebenen zeitlichen Relation außerordentlich gering ist.

Wie schon für ein einzelnes Haushaltsgerät anhand von Figur 2 beschrieben, kann die Betriebssicherheit der Kochmulde durch weitere gesonderte Maßnahmen gewährleistet werden. Damit beispielsweise eine ausgeschaltete Kochmulde bzw. ein sonstiges an den zentralen Rechner CC angeschlossenes Haushaltsgerät nicht z.B. durch ein mehrere Wochen lang spielendes Radio eingeschaltet werden kann, das eine zufällige passende Kombination von Schlüsselwörtern angibt, wird, wie schon beschrieben, nach einem Ausführungsbeispiel der vorliegenden Erfindung ein vollständig abgeschaltetes Haushaltsgerät vor dem Einschalten durch die manuelle Betätigung eines mechanischen Bedienelements für die Eingabe von Sprachsignalen vorbereitet. Wenn diese Bedienung innerhalb einer bestimmten Zeit nicht erfolgt, dann geht die durch die vorstehend genannten Einrichtungen des Haushaltsgeräts gebildete Bedienlogik wieder in ihren Ruhezustand über und kann nicht durch eine zufällige Kombination von Schlüsselwörtern in Betrieb genommen werden.

Wenn unmittelbar nach Aussprache einer Folge von Schlüsselwörtern bei einer weiteren Kochstelle der Kochmulde Aktionen ausgelöst werden sollen, dann ist die Aussprache des Schlüsselwortes "Mulde" nicht notwendig, wenn die hierfür definierte Zeit eines Time-outs Tt noch nicht verstrichen ist. Es kann dann sofort eine neue Kochstelle durch das entsprechende Schlüsselwort ausgewählt werden.

Analog wird verfahren, wenn bei einer Kochstelle mehrere Aktionen durchgeführt werden sollen. Ein Beispiel hierfür ist die Folge von Schlüsselwörtern "Mulde - Kochstelle - vorne links - ein - Zone - Ankochen": Sie schaltet die Kochstelle vorne links mit der Zusatzzone ein und setzt den Ankochstoß. Wenn mindestens ein Heizelement der Kochmulde in Betrieb ist, dann ist eine Betätigung des mechanischen Bedienelements (Sicherheitsschalter) vor jeder weiteren sprachlichen Bedienung der Kochmulde nicht notwendig, denn es kann davon ausgegangen werden, daß sich eine zur Bedienung der Kochmulde autorisierte Person im Raum befindet und wie bisher die sichere Funktion der Kochmulde überwacht.

### Bezugszeichenliste

- 1: Haushaltsgerät
- 2: mechanische Bedienelemente
- 3: erste Einrichtung zur Eingabe von Sprachsignalen
- 4, CPU: Steuerwerk von 1
- 41: zweite Einrichtung zur Erkennung der durch die Sprachsignale bezeichneten Betriebsfunktionen
- 42: dritte Einrichtung zur Umsetzung erkannter Sprachsignale in einen Steuerbefehl
- P: Leistungsquelle
- T12, T23, T34: Zeiträume zwischen der Eingabe von Sprachsignalen
- Tt: Pausen zwischen Sprachsignalen
- W1, W2, W3, W4: Sprachsignale
- CC: zentraler Rechner
- A1, ... ,An: Haushaltsgeräte
- ALC1, ... ALCn: Steuerwerke von A1, ... An

## Patentansprüche

1. Haushaltsgerät, insbesondere elektrisch betriebenes Haushaltsgerät (1), mit mechanischen Bedienelementen (2), durch deren Betätigung jeweils ein Steuerbefehl zum Betrieb des Haushaltsgeräts (1) eingebbar ist, wobei das Haushaltsgerät (1) anstelle der mechanischen Bedienelemente (2) oder zusätzlich zu den mechanischen Bedienelementen (2) eine erste Einrichtung (3) zur Eingabe von mindestens zwei Sprachsignalen (Wi, i = 1, ..., n), die Betriebsfunktionen des Haushaltsgeräts bezeichnen, aufweist, sowie eine zweite Einrichtung (41) zur Erkennung der durch die Sprachsignale bezeichneten Betriebsfunktionen und eine dritte Einrichtung (42) zur Umsetzung der erkannten Sprachsignale in einen Steuerbefehl zum Betrieb des Haushaltsgeräts(1), wobeidie dritte Einrichtung (42) den Steuerbefehl nur erzeugt, wenn die Sprachsignale in einer durch einen Menübaum definierten Reihenfolge eingegeben werde, **dadurch gekennzeichnet, daß** der ersten Einrichtung (3) und/oder der zweiten Einrichtung (41) und/oder der dritten Einrichtung (42) ein Steuerwerk (4, CPU) mit einem Steuerungsprogramm zugeordnet ist, das in der Weise ausgestaltet ist, daß unmittelbar aufeinanderfolgende Sprachsignale, mit denen unterschiedliche Betriebsfunktionen oder Komponenten des Haushaltsgeräts auswählbar sind, nur dann zur Bildung genau eines Steuerbefehls führen, wenn die aufeinanderfolgenden Sprachsignale (W1, W2, W3, W4) zeitlich jeweils nur um eine vorgebbare erste Pausenzeit (Tt) getrennt und innerhalb einer vorgebbaren zweiten Zeit (T12, T23, T34) eingegeben werden.

2. Haushaltsgerät nach Anspruch 1, **dadurch gekennzeichnet, daß** bei einer Eingabe aufeinanderfolgender Sprachsignale außerhalb der vorgebbaren Zeit oder bei einem Abbruch der Sprachsignaleingabe ein Steuerbefehl nur dann gebildet wird, wenn alle zur Bildung eines Steuerbefehls erforderlichen Sprachsignale in der definierten Reihenfolge und aufeinanderfolgende Sprachsignale innerhalb der vorgebbaren Zeit (T12, T23, T34) erneut eingegeben werden.

3. Haushaltsgerät nach einem der vorstehenden Ansprüche, **dadurch gekennzeichnet, daß** die Sprachsignalerkennung sprecherunabhängig erfolgt.

4. Haushaltsgerät nach einem der vorstehenden Ansprüche, **dadurch gekennzeichnet, daß** das Steuerungsprogramm in der Weise ausgestaltet ist, daß die erste Einrichtung (3) und/oder die zweite Einrichtung (41) und/oder die dritte Einrichtung (42) nur nach Betätigung eines mechanischen Bedienelements (2) aktivierbar ist (sind).

5. Haushaltsgerät nach Anspruch 4, **dadurch gekennzeichnet, daß** das Steuerungsprogramm in der Weise ausgestaltet ist, daß die erste Einrichtung (3) und/oder die zweite Einrichtung (41) und/oder die dritte Einrichtung (42) unmittelbar nach einem Abschalten des Haushaltsgeräts (1) nur nach Betätigung eines mechanischen Bedienelements (2) aktivierbar ist (sind).

6. Haushaltsgerät nach Anspruch 4 oder 5, **dadurch gekennzeichnet, daß** die erste, die zweite und die dritte Einrichtung (3, 41, 42) in einem vorgebbaren Zeitraum nach Betätigung eines mechanischen Bedienelements (2) aktivierbar ist (sind).

7. Haushaltsgerät nach einem der vorstehenden Ansprüche, **dadurch gekennzeichnet, daß** die erste Einrichtung (3) am Haushaltsgerät (1) oder getrennt von diesem angeordnet ist.

8. Haushaltsgerät nach einem der vorstehenden Ansprüche, **dadurch gekennzeichnet, daß** die erste Einrichtung (3) in einem tragbaren Femsprechendgerät integriert ist.

9. Haushaltsgerät nach einem der vorstehenden Ansprüche, **dadurch gekennzeichnet, daß** es mehr als ein elektrisches Verbrauchselement (K1, K2, K3, K4) aufweist, das individuell durch die Sprachsignale steuerbar ist.

10. Haushaltsgerät nach einem der Ansprüche 1-9, **dadurch gekennzeichnet, daß** dieses mit einem zentralen Rechner (CC) verbunden ist, an den weitere Haushaltsgeräte anschließbar sind, und daß die erste Einrichtung (3) zur Eingabe von Sprachsignalen, die Betriebsfunktionen mindestens eines Haushaltsgeräts bezeichnen, und/oder die zweite Einrichtung (41) zur Erkennung der durch die Sprachsignale bezeichneten Betriebsfunktionen und/oder die dritte Einrichtung (42) zur Umsetzung erkannter Sprachsignalinhalte in Steuerbefehle dem zentralen Rechner (CC) zugeordnet ist.

11. Haushaltsgerät nach Anspruch 10, **dadurch gekennzeichnet, daß** dem zentralen Rechner (CC) das Steuerungsprogramm zugeordnet ist.

12. Haushaltsgerät nach einem der vorstehenden Ansprüche, **dadurch gekennzeichnet, daß** die erste Einrichtung (3) räumlich getrennt von der zweiten Einrichtung (41) zur Erkennung der durch die Sprachsignale bezeichneten Betriebsfunktionen angeordnet ist und daß die erste Einrichtung (3) über ein abgeschirmtes Kabel mit der zweiten Einrichtung (41) verbunden ist.

13. Haushaltsgerät nach einem der vorstehenden Ansprüche, **dadurch gekennzeichnet, daß** die erste Einrichtung (3) mindestens ein Mikrophon aufweist, und daß das Mikrophon etwa in der Höhe des Kopfes einer Bedienperson angeordnet ist.

14. Haushaltsgerät nach einem der vorstehenden Ansprüche, **dadurch gekennzeichnet, daß** die erste Einrichtung (3) mindestens ein Mikrophon aufweist, und daß das Mikrophon an einem körperschalldämpfenden Halteelement installiert ist.

15. Haushaltsgerät nach einem der vorstehenden Ansprüche, **dadurch gekennzeichnet, daß** die erste Einrichtung (3) ein elektrisches Filter aufweist, das Schwingungen mit Frequenzen unterhalb von etwa 100 Hertz und/oder Schwingungen mit Frequenzen oberhalb von etwa 5 Kilohertz dämpft.

16. Haushaltsgerät nach einem der vorstehenden Ansprüche, **dadurch gekennzeichnet, daß** der ersten Einrichtung (3) eine Einrichtung zugeordnet ist, die akustische Störungen, insbesondere elektrische Signale, die die akustischen Störungen darstellen, mißt.

17. Haushaltsgerät nach Anspruch 16, **dadurch gekennzeichnet, daß** der ersten Einrichtung (3) eine Einrichtung zugeordnet ist, die die gemessenen akustischen Störungen, insbesondere elektrische Signale, die die akustischen Störungen darstellen, mit elektrischen Nutzschallsignalen vergleicht.

18. Haushaltsgerät nach einem der Ansprüche 1 bis 11 oder 13 bis 17, **dadurch gekennzeichnet, daß** die erste Einrichtung (3) in einem tragbaren Fernsprechendgerät integriert ist.

19. Kombination aus einer ersten Einrichtung zur Eingabe von mindestens zwei Sprachsignalen (Wi, i = 1, ..., n), die Betriebsfunktionen eines Haushaltsgeräts bezeichnen, aus zweiten Einrichtung zur Erkennung der durch die Sprachsignale bezeichneten Betriebsfunktionen und einer dritten Einrichtung (3, 41, 42) zur Umsetzung der erkannten Sprachsignale in einen Steuerbefehl, wobei die erste, zweite und dritte Einrichtung zum Betrieb des Haushaltsgeräts (1) angepasst sind, insbesondere eines elektrisch betriebenen Haushaltsgeräts (1), mit mechanischen Bedienelementen (2), durch deren Betätigung jeweils ein Steuerbefehl zum Betrieb des Haushaltsgeräts (1) eingebbar ist, wobei das Haushaltsgerät (1) anstelle der mechanischen Bedienelemente (2) oder zusätzlich zu den mechanischen Bedienelementen (2) die erste Einrichtung (3), die zweite Einrichtung (41) und die dritte Einrichtung (42) aufweist, wobei die dritte Einrichtung (42) den Steuerbefehl nur erzeugt, wenn die Sprachsignale in einer durch einen Menübaum definierten Reihenfolge eingegeben werden, wobei der ersten Einrichtung (3) und/oder der zweiten Einrichtung (41) und/oder der dritten Einrichtung (42) ein Steuerwerk (4, CPU) mit einem Steuerungsprogramm zugeordnet ist, das in der Weise ausgestaltet ist, daß unmittelbar aufeinanderfolgende Sprachsignale, mit denen unterschiedliche Betriebsfunktionen oder Komponenten des Haushaltsgeräts auswählbar sind, nur dann zur Bildung genau eines Steuerbefehls führen, wenn die aufeinanderfolgenden Sprachsignale (W1, W2, W3, W4) zeitlich jeweils nur um eine vorgebbare erste Pausenzeit (Tt) getrennt und innerhalb einer vorgebbaren zweiten Zeit (T12, T23, T34) eingegeben werden.

## Claims

1. Domestic appliance, especially an electrically operated domestic appliance (1), with mechanical control elements (2), through the actuation of which in each case a control command for operation of the domestic appliance (1) can be input, wherein the domestic appliance (1) has, instead of the mechanical control elements (2) or additionally to the mechanical control elements (2) a first device (3) for the input of at least two speech signals (Wi, i = 1, ..., n), which denote operating functions of the domestic appliance, as well as a second device (41) for recognition of the operating functions denoted by the speech signals and a third device (42) for conversion of the recognised speech signals into a control command for operation of the domestic appliance (1), wherein the third device (42) generates the control command only when the speech signals are input in a sequence defined by a menu tree, **characterised in that** the first device (3) and/or the second device (41) and/or the third device (42) is or are associated with a control system (4, CPU) with a control program which is designed in such a manner that directly successive speech signals by which different operating functions or components of the domestic appliance are selectable lead to formation of a control command strictly only when the successive speech signals (W1, W2, W3, W4) are separated in time in each case only by a predeterminable first pause time (Tt) and are input within a predeterminable second time (T12, T23, T34).

2. Domestic appliance according to claim 1, **characterised in that** in the case of an input of successive speech signals outside the predeterminable time or in the case of a breaking-off of the speech signal input a control command is formed only when all speech signals required for formation of a control command are input again in the defined sequence and successive speech signals within the predeterminable time (T12, T23, T34).

3. Domestic appliance according to one of the preceding claims, **characterised in that** the speech signal recognition is carried out independently of speaker.

4. Domestic appliance according to one of the preceding claims, **characterised in that** the control program is designed in such a manner that the first device (3) and/or the second device (41) and/or the third device (42) is or are activatable only after actuation of a mechanical control element (2).

5. Domestic appliance according to claim 4, **characterised in that** the control program is designed in such a manner that the first device (3) and/or the second device (41) and/or the third device (42) is or are activatable, directly after switching-off of the domestic appliance (1), only after actuation of a mechanical control element (2).

6. Domestic appliance according to claim 4 or 5, **characterised in that** the first, second and third device (3, 41, 42) are activatable in a predeterminable time period after actuation of a mechanical control element (2).

7. Domestic appliance according to one of the preceding claims, **characterised in that** the first device (3) is arranged at the domestic appliance (1) or separately therefrom.

8. Domestic appliance according to one of the preceding claims, **characterised in that** the first device (3) is integrated in a portable telephone terminal apparatus.

9. Domestic appliance according to one of the preceding claims, **characterised in that** it comprises more than one electrical consumer element (K1, K2, K3, K4) which is individually controllable by the speech signals.

10. Domestic appliance according to one of claims 1 to 9, **characterised in that** this is connected with a central computer (CC), to which further domestic appliances are connectible, and that the first device (3) for input of speech signals denoting operating functions of at least one domestic appliance and/or the second device (41) for recognition of the operating functions denoted by the speech signals and/or the third device (42) for conversion of recognised speech signals into control commands is or are associated with the central computer (CC).

11. Domestic appliance according to claim 10, **characterised in that** the control program is associated with the central computer (CC).

12. Domestic appliance according to one of the preceding claims, **characterised in that** the first device (3) is arranged to be physically separate from the second device (41) for recognition of the operating functions denoted by the speech signals and that the first device (3) is connected with the second device (41) by way of a shielded cable.

13. Domestic appliance according to one of the preceding claims, **characterised in that** the first device (3) comprises at least one microphone and that the microphone is arranged approximately at the height of the head of a user.

14. Domestic appliance according to one of the preceding claims, **characterised in that** the first device (3) comprises at least one microphone and that the microphone is installed at a mounting element damping solid-borne sound.

15. Domestic appliance according to one of the preceding claims, **characterised in that** the first device (3) comprises an electrical filter which damps oscillations at frequencies below about 100 hertz and/or oscillations at frequencies above about 5 kilohertz.

16. Domestic appliance according to one of the preceding claims, **characterised in that** the first device (3) is associated with a device which measures acoustic disturbances, particularly electrical signals representing the acoustic disturbances.

17. Domestic appliance according to claim 16, **characterised in that** the first device (3) is associated with a device which compares the measured acoustic disturbances, particularly electrical signals representing the acoustic disturbances, with electrical useful sound signals.

18. Domestic appliance according to one of claims 1 to 11 or 13 to 17, **characterised in that** the first device (3) is integrated in a portable telephone terminal apparatus.

19. Combination consisting of a first device for input of at least two speech signals (Wi, i = 1, ..., n) denoting operating functions of a domestic appliance, a second device for recognition of the operating functions denoted by the speech signals and a third device (3, 41, 42) for conversion of the recognised speech signals into a control command, wherein the first, second and third devices are adapted to the operation of the domestic appliance (1), particularly an electrically operated domestic appliance (1), by mechanical control elements (2), through the actuation of which in each case a control command for operation of the domestic appliance (1) can be input, wherein the domestic appliance (1) has, instead of the mechanical control elements (2) or additionally to the mechanical control elements (2), the first device (3), the second device (41) and the third device (42), wherein the third device (42) generates the control command only when the speech signals are input in a sequence defined by a menu tree, wherein the first device (3) and/or the second device (41) and/or the third device (42) is or are associated with a control system (4, CPU) with a control program which is designed in such a manner that directly successive speech signals by which different operating functions or components of the domestic appliance are selectable lead to formation of a control command strictly only when the successive speech signals (W1, W2, W3, W4) are separated in time in each case only by a predeterminable first pause time (Tt) and are input within a predeterminable second time (T12, T23, T34).

## Revendications

1. Appareil ménager, en particulier appareil ménager électrique (1) comprenant des éléments d'utilisation mécaniques (2) par l'actionnement desquels un ordre de commande pour le fonctionnement de l'appareil ménager (1) peut être donné à chaque fois, l'appareil ménager (1) présentant à la place des éléments d'utilisation mécaniques (2) ou en complément aux éléments d'utilisation mécaniques (2) un premier dispositif (3) pour introduire au moins deux signaux vocaux (Wi, i = 1, ..., n), qui désignent les fonctions d'exploitation de l'appareil ménager, ainsi qu'un deuxième dispositif (41) de reconnaissance des fonctions d'exploitation désignées par les signaux vocaux et un troisième dispositif (42) pour transposer les signaux vocaux reconnus en un ordre de commande pour l'exploitation de l'appareil ménager (1), le troisième dispositif (42) ne produisant l'ordre de commande que lorsque les signaux vocaux sont introduits dans un ordre défini par un arbre de menus, **caractérisé en ce qu'**une unité de commande (4, CPU) avec un programme de commande est associée au premier dispositif (3) et-/-ou au deuxième dispositif (41) et-/-ou au troisième dispositif (42), qui est configurée de manière à ce que des signaux vocaux directement consécutifs avec lesquels différentes fonctions d'exploitation ou composantes de l'appareil ménager peuvent être sélectionnées, n'entraînent ensuite la formation précisément d'un ordre de commande que lorsque les signaux vocaux consécutifs (W1, W2, W3, W4) ne sont séparés à chaque fois dans le temps que d'un premier temps de pause pouvant être prédéterminé (Tt) et introduits dans l'espace d'un deuxième temps pouvant être prédéterminé (T12, T23, T34).

2. Appareil ménager selon la revendication 1, **caractérisé en ce que** lors de l'introduction de signaux vocaux consécutifs en dehors du temps pouvant être prédéterminé ou lors de l'arrêt de l'introduction des signaux vocaux, un ordre de commande n'est alors formé que lorsque tous les signaux vocaux nécessaires pour former un ordre de commande dans l'ordre défini et les signaux vocaux consécutifs sont introduits de nouveau dans l'espace du temps pouvant être prédéterminé (T12, T23, T34).

3. Appareil ménager selon l'une des revendications précédentes, **caractérisé en ce que** la reconnaissance des signaux vocaux se fait indépendamment du locuteur.

4. Appareil ménager selon l'une des revendications précédentes, **caractérisé en ce que** le programme de commande est configuré de manière telle que le premier dispositif (3) et-/-ou le deuxième dispositif (41) et-/-ou le troisième dispositif (42) ne peut (peuvent) être activé(s) qu'après actionnement d'un élément d'utilisation mécanique (2).

5. Appareil ménager selon la revendication 4, **caractérisé en ce que** le programme de commande est configuré de manière telle que le premier dispositif (3) et-/-ou le deuxième dispositif (41) et-/-ou le troisième dispositif (42) peut (peuvent) être activé(s) directement après une déconnexion de l'appareil ménager (1) uniquement après actionnement d'un élément d'utilisation mécanique (2).

6. Appareil ménager selon la revendication 4 ou 5, **caractérisé en ce que** le premier, le deuxième et le troisième dispositif (3, 41, 42) peut (peuvent) être activé(s) dans une période pouvant être prédéfinie après actionnement d'un élément d'utilisation mécanique (2).

7. Appareil ménager selon l'une des revendications précédentes, **caractérisé en ce que** le premier dispositif (3) est disposé sur l'appareil ménager (1) ou séparé de celui-ci.

8. Appareil ménager selon l'une des revendications précédentes, **caractérisé en ce que** le premier dispositif (3) est intégré dans un terminal téléphonique portable.

9. Appareil ménager selon l'une des revendications précédentes, **caractérisé en ce qu'**il présente plus d'un élément d'utilisation électrique (K1, K2, K3, K4) pouvant être commandé individuellement par les signaux vocaux.

10. Appareil ménager selon l'une des revendications 1-9, **caractérisé en ce que** celui-ci est relié à un ordinateur central (CC) auxquels peuvent être raccordés d'autres appareils ménagers, et **en ce que** le premier dispositif (3) d'introduction de signaux vocaux, qui désignent les fonctions d'exploitation d'au moins un appareil ménager, et-/-ou le deuxième dispositif (41) de reconnaissance des fonctions d'exploitation désignées par les signaux vocaux et-/-ou le troisième dispositif (42) de conversion des contenus de signaux vocaux reconnus dans les ordres de commande est associé à l'ordinateur central (CC).

12. Appareil ménager selon l'une des revendications précédentes, **caractérisé en ce que** le premier dispositif (3) est disposé en étant séparé dans l'espace du deuxième dispositif (41) de reconnaissance des fonctions d'exploitation désignées par les signaux vocaux et **en ce que** le premier dispositif (3) est relié par un câble blindé au deuxième dispositif (41).

13. Appareil ménager selon l'une des revendications précédentes, **caractérisé en ce que** le premier dispositif (3) présente au moins un microphone et **en ce que** le microphone est disposé presque à la hauteur de la tête de l'utilisateur.

14. Appareil ménager selon l'une des revendications précédentes, **caractérisé en ce que** le premier dispositif (3) présente au moins un microphone et **en ce que** le microphone est installé sur un élément de maintien amortissant les bruits corporels.

15. Appareil ménager selon l'une des revendications précédentes, **caractérisé en ce que** le premier dispositif (3) présente un filtre électrique, qui amortit les vibrations avec des fréquences inférieures à 100 hertz environ et-/-ou des vibrations avec des fréquences supérieures à 5 kilohertz environ.

16. Appareil ménager selon l'une des revendications précédentes, **caractérisé en ce qu'**un dispositif est associé au premier dispositif (3), qui mesure les perturbations acoustiques, notamment des signaux électriques qui représentent les perturbations acoustiques.

17. Appareil ménager selon la revendication 16, **caractérisé en ce qu'**un dispositif est associé au premier dispositif (3) qui compare les perturbations acoustiques mesurées, notamment des signaux électriques, qui représentent les perturbations acoustiques, avec des signaux sonores utiles électriques.

18. Appareil ménager selon l'une des revendications 1 à 11 ou 13 à 17, **caractérisé en ce que** le premier dispositif (3) est intégré dans un terminal téléphonique portable.

19. Combinaison d'un premier dispositif d'introduction d'au moins deux signaux vocaux (Wi, i = 1, ..., n), qui désignent des fonctions d'exploitation d'un appareil ménager, d'un deuxième dispositif de reconnaissance des fonctions d'exploitation désignées par les signaux vocaux et d'un troisième dispositif (3, 41, 42) de conversion des signaux vocaux reconnus en un ordre de commande, les premier, deuxième et troisième dispositifs étant adaptés pour l'exploitation de l'appareil ménager (1), en particulier d'un appareil ménager électrique (1), avec des éléments d'utilisation mécaniques (2), par l'actionnement desquels un ordre de commande pour le fonctionnement de l'appareil ménager (1) peut être donné, l'appareil ménager (1) présentant à la place des éléments d'utilisation mécaniques (2) ou en complément aux éléments d'utilisation mécaniques (2) le premier dispositif (3), le deuxième dispositif (41) et le troisième dispositif (42), le troisième dispositif (42) ne produisant l'ordre de commande que lorsque les signaux vocaux sont introduits dans un ordre défini par un arbre de menus, une unité de commande (4, CPU) avec un programme de commande étant associée au premier dispositif (3) et-/-ou au deuxième dispositif (41) et-/-ou au troisième dispositif (42), qui est configurée de manière à ce que des signaux vocaux directement consécutifs avec lesquels différentes fonctions d'exploitation ou composantes de l'appareil ménager peuvent être sélectionnées, n'entraînent ensuite la formation précisément d'un ordre de commande que lorsque les signaux vocaux consécutifs (W1, W2, W3, W4) sont séparés à chaque fois dans le temps que d'un premier temps de pause pouvant être prédéterminé (Tt) et introduits dans l'espace d'un deuxième temps pouvant être prédéterminé (T12, T23, T34).
